# EUROPÄISCHE PATENTSCHRIFT

(11) **EP 4 094 998 B1**
(45) Veröffentlichungstag und Bekanntmachung des Hinweises auf die Patenterteilung: **17.07.2024**
(21) Anmeldenummer: 21176284.4
(22) Anmeldetag: 27.05.2021
(51) Int. Cl.: B60R 19/56, B60R 19/38

(54) **UNTERFAHRSCHUTZ FÜR FAHRZEUGE MIT KIPPBARER LADEFLÄCHE**
UNDERRIDE PROTECTION FOR VEHICLES WITH TILTABLE LOADING PLATFORM
PROTECTION CONTRE L'ENCASTREMENT POUR VÉHICULES POURVUS DE ZONE DE CHARGEMENT BASCULANTE

(43) Veröffentlichungstag der Anmeldung: 30.11.2022
(73) Patentinhaber: Fahrzeugbau KEMPF GmbH, 56470 Bad Marienberg (DE)
(72) Erfinder: Dreßler, Daniel, 56470 Bad Marienberg (DE)
(74) Vertreter: Hannke, Christian

(56) Entgegenhaltungen:
- EP-A1- 0 894 678
- EP-A2- 1 132 259
- WO-A1-2017/130015
- WO-A1-2019/185618
- CN-A- 106 756 495
- DE-A1- 10 130 637
- DE-C1- 19 751 217
- JP-A- 2016 107 674

## Beschreibung

Die Erfindung betrifft einen Unterfahrschutz für Nutzfahrzeuge mit einem Chassis, mit mindestens zwei, in einer Breitenrichtung des Chassis nebeneinander liegenden Stangenträgern, welche in einer Längsrichtung an einem hinteren Ende des Chassis anbringbar sind und zum Befestigen einer sich parallel zu einer Fahrbahnebene erstreckenden Unterfahrschutzstange dienen, wobei die beiden Stangenträger jeweils mindestens einen oberen Stangenträgerteil und einen unteren Stangenträgerteil aufweisen und der untere Stangenträgerteil mit der Unterfahrschutzstange bezüglich einer Schwenkachse zum oberen Stangenträgerteil schwenkbar ist.

Das Anbringen von Unterfahrschützen ist aus Sicherheitsgründen vor allem für PKW Fahrer in den meisten Ländern für bestimmte Fahrzeugklassen vorgeschrieben und somit aus dem Stand der Technik bekannt. Insbesondere werden Unterfahrschütze als hintere Stoßstange bei Nutzfahrzeugen wie Lastkraftwagen, Kippern, Muldenkippern oder Anhängern für die Nutzfahrzeuge, wie zum Beispiel Sattelauflieger, montiert. Bei der Montage von Unterfahrschützen ist zumeist auf die geltenden gesetzlichen Vorschriften zu achten, welche vor allem die Position am Fahrzeug, die Dimensionierung und die Stabilität eines Unterfahrschutzes vorschreiben.

Üblicherweise werden die Unterfahrschütze dabei mit zwei parallel zueinander angeordneten Stangenträgern am Chassis des Nutzfahrzeugs angebracht, wobei an diesen Stangenträgern eine Unterfahrschutzstange so befestigt ist, dass ein Unterfahren des Nutzfahrzeugs durch ein kleineres Fahrzeug vermieden wird. Aus dem Stand der Technik sind dabei vor allem Konzepte bekannt, bei denen ein Unterfahrschutz starr am Fahrzeug verbaut ist und in seiner Position nicht verstellt werden, oder auf ein anderes Fahrzeug angepasst werden kann. Weiterhin sind Konzepte bekannt, bei denen durch lösen diverser Schrauben zwei kreisförmige Lochbilder zueinander gedreht werden können und damit die Unterfahrschutzstange in ihrem Abstand zur Fahrbahn anpassbar ist. Dies ist vor allem Sinnvoll, wenn ein Unterfahrschutz-Konzept an verschiedenen Fahrzeugtypen angebracht werden soll. Ein entsprechendes System wird zum Beispiel in DE19751217C1 offenbart. Vor allem bei Fahrzeugen welche teilweise auch im Gelände eingesetzt werden wäre eine Ausführungsform bevorzugt, bei welcher die Bodenfreiheit des Fahrzeugs durch Hochklappen der Unterfahrschutzstange über ein System mit einem Schnellverschluss erhöht werden kann.

Unterfahrschütze werden meist nach aktuell geltenden Regularien und Vorschriften ausgelegt, weshalb viele Konzepte beim Inkrafttreten verschärfter Regularien überarbeitet oder ausgetauscht werden müssen um eine Zulassung zu erlangen. Vor allem sind in diesem Zusammenhang die Anforderungen der neuen Regelung UNECE-R 58-03 zu nennen, da diese eine wesentlich höhere Widerstandsfähigkeit von Unterfahrschützen beim Aufprall beispielsweise eines PKWs fordert. Die meisten Unterfahrschutz-Konzepte können auf Grund ihrer Bauweise die geforderte Belastbarkeit nicht erbringen. Ebenfalls können viele aus dem Stand der Technik bekannte Unterfahrschutzstangen selbst den geforderten Belastungen nicht standhalten. DE 197 51 217 C1 offenbart einen Unterfahrschutz für Nutzfahrzeuge gemäß dem Oberbegriff des Anspruchs 1.

Es ist deshalb die Aufgabe der Erfindung einen Unterfahrschutz bereitzustellen, welcher mit wenigen Handgriffen in seiner Höhe verstellbar ist und zugleich der höheren geforderten Belastung bei Aufprall beispielsweise eines PKWs standhalten kann.

Diese Aufgabe wird gelöst durch einen Unterfahrschutz gemäß dem Anspruch 1.

Die oberen oder die unteren Stangenträgerteile weisen jeweils eine bogenabschnittsförmige, um die Schwenkachse verlaufende Nut und die anderen Stangenträgerteile jeweils einen in der Nut geführten Bolzen auf, wodurch eine maximal mögliche Schwenkbewegung der unteren Stangenträgerteile mit der Unterfahrschutzstange um die Schwenkachse herum in einem begrenzten Winkelbereich α liegt.

Bevorzugt sind die oberen und/oder die unteren Stangenträgerteile flach ausgebildet, wobei die die Erstreckungsebene der Stangenträgerteile vorzugsweise orthogonal zur Schwenkachse verläuft. Dadurch liegt die Nut in der Erstreckungsebene der Stangenträgerteile und demnach verläuft der Bolzen vorzugsweise parallel zur Schwenkachse durch die Nut.

Die Schwenkachse verläuft vorzugsweise durch Löcher in den oberen und unteren Stangenträgerteilen, wobei die unteren und oberen Stangenträgerteile jeweils so zueinander angeordnet sind, dass diese Löcher übereinander liegen und damit ein gemeinsames Loch ergeben. Vorzugsweise ist durch dieses Loch entlang der Breitenrichtung des Fahrzeugs, ein erstes Verbindungselement hindurchgeführt. Ein erstes Verbindungselement verbindet dadurch jeweils einen unteren Stangenträgerteil mit einem oberen Stangenträgerteil. Es ist auch denkbar, dass ein einziges Verbindungselement durch alle Stangenträgerteile hindurchgeführt ist, wobei dieses damit vorzugsweise als Stangenförmiges Element ausgebildet ist..

Vorzugsweise schränkt das erste Verbindungselement die translatorische Bewegungsfreiheit der unteren zu den oberen Stangenträgerteilen in allen Freiheitsgraden ein. Vorzugsweise sind zusätzlich zwei der drei rotatorischen Freiheitsgrade eingeschränkt, sodass eine Rotation der unteren Stangenträgerteile mit der Unterfahrschutzstange ausschließlich um die Schwenkachse möglich ist.

Vorzugsweise ist der Bolzen, welcher durch die Nut verläuft, als zweites Verbindungselement ausgebildet. Vorzugsweise verbindet das zweite Verbindungselement jeweils ein unteres Stangenträgerteil mit einem oberen Stangenträgerteil. Dabei ist das zweite Verbindungselement vorzugsweise so ausgelegt, dass es die Bewegung eines unteren zu einem oberen Stangenträgerteil translatorisch nur in der Breitenrichtung einschränkt. Damit ist der Bolzen, entsprechend einer Rotation der unteren Stangenträgerteile mit der Unterfahrschutzstange um die Schwenkachse, durch die Nut führbar.

Die Nut ist vorzugsweise in einem festen Radius um die Schwenkachse angeordnet, wobei durch die Längsgröße der Nut vorzugsweise der Winkelbereich α bestimmt ist, um welchen die unteren Stangenträgerteile und die Unterfahrschutzstange um die Schwenkachse schwenkbar sind.

Der Radius in welchem die Nut um die Schwenkachse angeordnet ist beträgt vorzugsweise 125mm. Es ist denkbar, dass auch ein größerer oder kleinerer Radius möglich ist.

Gemäß zumindest einer weiteren Ausführungsform verläuft die Schwenkachse parallel zur Fahrbahnebene in einer Breitenrichtung des Fahrzeugs, womit die Schwenkung der unteren Stangenträgerteile und der Unterfahrschutzstange zwischen der Höhenrichtung und der Längsrichtung verläuft. Es ist denkbar, dass bei unebenem Untergrund die Schwenkachse nicht mehr parallel zur Fahrbahnebene verläuft. In diesem Fall ist es denkbar, dass die Unterfahrschutzstange weiterhin parallel zur Breitenrichtung des Chassis und damit vorzugsweise auch parallel zur Schwenkachse verläuft.

Gemäß zumindest einer weiteren Ausführungsform sind die unteren Stangenträgerteile mit der Unterfahrschutzstange beim Schwenken um die Schwenkachse durch den Bolzen in der Nut in einer oberen und einer unteren Endstellung begrenzt, wobei die Unterfahrschutzstange in der oberen Endstellung weiter von der Fahrbahnebene entfernt ist, als in der unteren Endstellung.

Die Nut existiert dabei vorzugsweise nur in einem bestimmten Winkelbereich α um die Schwenkachse in entweder dem oberen, oder dem unteren Stangenträgerteil. Durch die Begrenzung der Nut, können die unteren Stangenträgerteile mit der Unterfahrschutzstange nicht um 360° um die Schwenkachse geschwenkt werden, sondern nur in dem Winkelbereich α, welcher durch die Nut begrenzt ist.

Die obere und untere Endposition werden vorzugsweise dann erreicht, wenn der Bolzen durch die Begrenzung der Nut bei Schwenkung der unteren Stangenträgerteile mit der Unterfahrschutzstange nicht weiter entlang dieser führbar ist.

Vorzugsweise befinden sich die unteren Stangenträgerteile mit der Unterfahrschutzstange in der unteren Endstellung, sobald das Fahrzeug auf Fahrbahnen unterwegs ist, welche den gesetzlichen Regulierungen unterliegen. Demnach befinden sich die unteren Stangenträgerteile mit der Unterfahrschutzstange vorzugsweise nur in der oberen Endstellung, wenn sich das Fahrzeug im Einsatz abseits von befahrenen Straßen befindet. Vorzugsweise werden die unteren Stangenträgerteile mit der Unterfahrschutzstange nur in die obere Endstellung gebracht, sofern die Bodenfreiheit zwischen der Unterfahrschutzstange und dem Fahrbahnniveau in der unteren Endstellung nicht ausreichend ist.

Gemäß zumindest einer weiteren Ausführungsform sind die unteren Stangenträgerteile mit der Unterfahrschutzstange zwischen der unteren und der oberen Endstellung um den Winkelbereich α schwenkbar. Der Winkelbereich α beschreibt dabei vorzugsweise die Größe der Nut in Bezug zu einem Vollkreis um die Schwenkachse. Die Nut ist demnach vorzugsweise so ausgelegt, dass sie ein Schwenken in einem festgelegten Winkelbereich α begrenzt. Es ist denkbar, dass die resultierende Schwenkung der Unterfahrschutzstange um die Schwenkachse ebenfalls in diesem Winkelbereich α begrenzt ist.

Vorzugsweise befinden sich die unteren Stangenträgerteile mit der Unterfahrschutzstange in der oberen Endstellung, wenn sie um den maximalen Winkel des Winkelbereichs α geschwenkt sind. Zudem befinden sich die unteren Stangenträgerteile mit der Unterfahrschutzstange vorzugsweise in der unteren Endstellung, wenn sie um den minimalen Winkel des Winkelbereichs α geschwenkt sind.

Gemäß zumindest einer weiteren Ausführungsform Umfasst der Winkelbereich α 0° bis 40°, bevorzugt 0° bis 60° und am meisten bevorzugt 0° bis 80°. Es ist denkbar, dass auch kleinere oder größere Winkelbereiche möglich sind.

Vorzugsweise entspricht der jeweils kleinere Winkel der Position der unteren Stangenträgerteile mit der Unterfahrschutzstange in der unteren Endstellung. Entsprechend steht der Größere Winkel vorzugsweise für die Position der unteren Stangenträgerteile mit der Unterfahrschutzstange in der oberen Endstellung. Die Differenz aus dem kleineren und dem größeren Winkel entspricht damit vorzugsweise dem Betrag um welchen die unteren Stangenträgerteile mit der Unterfahrschutzstange aus der unteren in die obere Endstellung schwenkbar sind.

Gemäß zumindest einer weiteren Ausführungsform kann der Unterfahrschutz zumindest in der unteren Endstellung des unteren Stangenträgerteils und der Unterfahrschutzstange einer plastischen Deformation, durch eine Kraft von mindestens 180kN in Längsrichtung zum Chassis standhalten.

Dadurch erfüllt der Unterfahrschutz vorzugsweise die Erfordernisse der der neuen Regelung UNECE-R 58-03. Bevorzugt hält der Unterfahrschutz einer Kraft von 180kN stand, wenn ein anderes und vorzugsweise von der Höhe kleineres Fahrzeug auf das Heck des Nutzfahrzeugs mit dem Unterfahrschutz prallt. Vorzugsweise verhindert der Unterfahrschutz damit ein Unterfahren des Nutzfahrzeugs durch das auffahrende Fahrzeug.

Es ist denkbar, dass der Unterfahrschutz auch in der oberen Endstellung des unteren Stangenträgerteils und der Unterfahrschutzstange einer Kraft von 180kN in Längsrichtung zum Chassis standhalten kann.

Vorzugsweise ist die untere Endstellung des unteren Stangenträgerteils und der Unterfahrschutzstange dazu geeignet schwere Unfälle durch unterfahren des Nutzfahrzeugs durch ein Heckseitig aufprallendes Fahrzeug zu verhindern, wohingegen die obere Endstellung des unteren Stangenträgerteils und der Unterfahrschutzstange dem Nutzfahrzeug im Gelände mehr Bodenfreiheit gewährt und damit den Einsatzbereich des Fahrzeugs erweitert.

Erfindungsgemäß ist an einem der Stangenträgerteile zumindest ein Sicherungselement angebracht, welches zumindest teilweise entlang der Breitenrichtung durch zumindest eines der Stangenträgerteile hindurchgeführt ist und dadurch die unteren Stangenträgerteile mit der Unterfahrschutzstange in der oberen und/oder unteren Endstellung arretiert.

Vorzugsweise nimmt das Sicherungselement keine Kraft bei Aufprall eines Fahrzeugs auf den Unterfahrschutz auf. Demnach kann das Sicherungselement auch nur einseitig an einem der Stangenträger vorhanden sein.

Bevorzugt weisen die oberen und unteren Stangenträgerteile neben den Löchern für die Verbindungselemente jeweils mindestens ein weiteres Loch auf, durch welche das Sicherungselement hindurchgeführt werden kann. Vorzugsweise ist das Sicherungselement in der oberen Endstellung sowohl durch die unteren, als auch durch die oberen Stangenträgerteile geführt. Es ist denkbar, dass das Sicherungselement in der unteren Endstellung nur durch das obere oder untere Stangenträgerteil geführt ist, wobei es eine Schwenkung um die Schwenkachse verhindert, indem es außerhalb des Körpers des jeweils anderen Stangenträgerteils liegt und für eine Schwenkung in dieses hineingeführt werden müsste.

Vorzugsweise ist das Sicherungselement an mindestens einem der unteren Stangenträgerteile montiert. Ein entsprechender unterer Stangenträgerteil weist vorzugsweise ein Loch auf, durch welches das Sicherungselement in Breitenrichtung hindurchführbar ist. Vorzugsweise weist zumindest ein oberer Stangenträgerteil ebenfalls mindestens ein Loch auf, durch welches das Sicherungselement in der oberen Endstellung hindurchführbar ist.

Erfindungsgemäß ist das Loch für das Sicherungselement im oberen Stangenträgerteil eine Nut, sodass das Sicherungselement mit verschieden ausgeführten unteren Stangenträgerteilen anwendbar ist.

Durch Anbringen eines Halteblechs, welches zumindest zwei Löcher aufweist kann ein oberer Stangenträgerteil vorzugsweise auf verschiedene untere Stangenträgerteile angepasst werden. Bevorzugt ist das Halteblech am oberen Stangenträgerteil dabei so angebracht, dass durch eines der Löcher die Schwenkachse und damit das erste Verbindungselement führt, wobei das andere Loch über der Nut angeordnet ist, sodass das Sicherungselement durch das Halteblech und das obere und untere Stangenträgerteil führbar ist. Vorzugsweise sind dadurch die unteren Stangenträgerteile und die Unterfahrschutzstange in der oberen Endstellung neben dem Hindurchführen des Sicherungselementes in die Nut im oberen Stangenträgerteil weiterhin durch das Hindurchführen des Sicherungselementes in das Loch des angebrachten Halteblechs, arretiert.

Vorzugsweise ist durch das Sicherungselement eine stufenlose Arretierung der unteren Stangenträgerteile mit der Unterfahrschutzstange in einem beliebigen Schwenkwinkel um die Schwenkachse möglich. Vorzugsweise können dadurch die unteren Stangenträgerteile mit der Unterfahrschutzstange, im durch die Nut begrenzten Winkelbereich, stufenlos arretiert werden.

Gemäß zumindest einer weiteren Ausführungsform ist das Sicherungselement als Stützbeinsicherung, Splint, Federriegel, Bolzen, oder ähnliches ausgeführt.

Es ist denkbar, dass das Sicherungselement so ausgelegt ist, dass die unteren Stangenträgerteile und die Unterfahrschutzstange mit einem Handgriff arretiert und wieder gelöst werden können. Vorzugsweise sind im arretierten Zustand durch das Sicherungselement in der unteren und/oder oberen Endstellung alle 6 Räumlichen Freiheitsgrade der Bewegung der unteren Stangenträgerteile und der Unterfahrschutzstange bezüglich der oberen Stangenträgerteile eingeschränkt.

Vorzugsweise ist das Sicherungselement mit einem Handgriff entlang der Breitenrichtung durch das untere und obere Stangenträgerteil führbar. Die Bewegung wird dabei vorzugsweise bei Betätigung eines Hebelmechanismus ausgeführt, wobei ein einfaches Einführen eines Bolzens, Splint, oder ähnlichem entlang der Breitenrichtung auch denkbar ist.

Gemäß zumindest einer weiteren Ausführungsform weist die Unterfahrschutzstange ein Material mit einer Brinellhärte zwischen 450 HBW und 550 HBW auf, wobei das Material vorzugsweise zumindest teilweise Chrom und/oder Mangan aufweist.

Das Material ist vorzugsweise eine Stahllegierung. Dabei ist es denkbar, dass die Legierung zumindest Chrom und/oder Mangan enthält. Vorzugsweise ist eine entsprechende Stahllegierung rostfrei und damit vor Korrosion geschützt. Bevorzugt ist es damit nicht notwendig den Unterfahrschutz mit einem zusätzlichen Korrosionsschutz zu versehen.

Es ist denkbar, dass die Stahllegierung eine hohe Festigkeit aufweist um bei Deformation durch Aufprall eines Fahrzeugs möglichst viel Kraft aufnehmen zu können. Vorzugsweise besteht vor allem die Unterfahrschutzstange aus einem hochfesten Material, damit diese sich bei Krafteinwirkung nicht verformt.

Gemäß zumindest einer weiteren Ausführungsform weisen die oberen Stangenträgerelemente Konturen auf, über welche diese mit oberen Befestigungselementen an einem Lochbild des Chassis befestigbar sind.

Vorzugsweise weisen die Konturen Stege auf, welche zwischen Schrauben an einem Lochbild des Chassis passen und über die Schrauben an dem Chassis befestigbar sind. Vorzugsweise wird jeder obere Stangenträgerteil mit mehreren Schrauben an dem Chassis befestigt.

Es ist denkbar, dass die Konturen genormt sind und damit an jedem Chassis mit der gleichen Normung angebracht werden können.

Es ist denkbar, dass eine Platte mit einem, zu den Konturen passendem Lochbild, an einem beliebigen Chassis befestigbar ist und damit der Unterfahrschutz an beliebigen Nutzfahrzeugen anbringbar ist.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen.

Es zeigen:
- Fig. 1: ein montierter Unterfahrschutz aus der Heckansicht
- Fig. 2: ein oberes Stangenträgerteil
- Fig. 3: ein unteres Stangenträgerteil
- Fig. 4: ein Unterfahrschutz in der unteren Endstellung
- Fig. 5: ein Unterfahrschutz in der oberen Endstellung

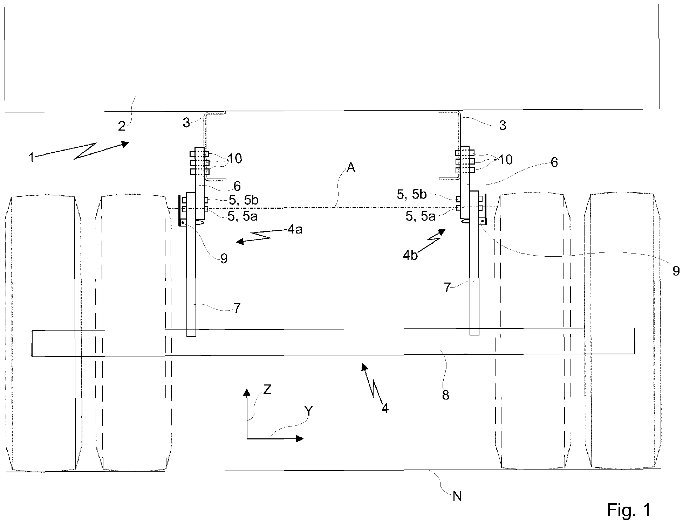

Figur 1 zeigt das hintere Ende 2 eines Nutzfahrzeugs 1 mit dem Chassis des Nutzfahrzeugs 3 aus einer Heckansicht. Weiterhin zeigt Figur 1, wie ein Unterfahrschutz 4 an dem Chassis 3 befestigt ist. Die beiden Trägerprofile des Chassis 3 sind in dieser Darstellung als U-Träger ausgebildet, wobei die Stangenträger 4a und 4b jeweils an der, von der Fahrzeugmitte in Breitenrichtung Y nach außen zeigenden Richtung, an diesen angebracht sind. Es ist denkbar, dass die Träger des Chassis 3 auch andere Trägerprofile aufweisen können.

Dabei sind die oberen Stangenträgerteile 6 vorzugsweise mit den oberen Befestigungselementen 10, welche entlang der Breitenrichtung Y zumindest teilweise durch die Konturen der oberen Stangenträgerteile 11 (hier nicht dargestellt) und die Trägerprofile des Chassis 3 geführt sind, an dem Chassis 3 verschraubt. Es ist denkbar, dass die Befestigungselemente 10 nicht als Schrauben, sondern als Nieten ausgeführt sind und damit die Befestigungselemente 10 nicht abschraubbar sind.

In einer weiteren Ausführungsmöglichkeit ist das obere Stangenträgerteil 6 mit dem Chassis 3 verschweißt, sodass keine Befestigungselemente 10 nötig sind. Vorzugsweise ist eine Zwischenplatte an dem Chassis 3 befestigt, welche ermöglicht die oberen Stangenträgerelemente 6 an dem Chassis 3 zu befestigen. Vorzugsweise ist diese Zwischenplatte an das Chassis 3 geschweißt, während die oberen Stangenträgerteile 6 jeweils an der Zwischenplatte angeschraubt sind.

An dem Ende der oberen Stangenträgerteilen 6 in Höhenrichtung Z zur Fahrbahnebene N sind die unteren Stangenträgerteile 7 angebracht. Die unteren Stangenträgerteile 7 sind vorzugsweise zumindest durch das erste und zweite Verbindungselement 5a und 5b an den oberen Stangenträgerteilen 6 befestigt. Die Verbindungselemente 5a und 5b sind dabei vorzugsweise entlang der Breitenrichtung Y zugleich durch die oberen und unteren Stangenträgerteile 6 und 7 geführt. Dabei verläuft die Schwenkachse A vorzugsweise parallel zur Breitenrichtung Y und mittig durch die die ersten Verbindungselemente 5a, wodurch die unteren Stangenträgerteile 7 mit der Unterfahrschutzstange 8 um die ersten Verbindungselemente 5a schwenkbar sind.

Die zweiten Verbindungselemente 5b verlaufen vorzugsweise parallel zu den ersten Verbindungselementen 5a durch die unteren und oberen Stangenträgerteile 6 und 7. Dabei verlaufen die zweiten Verbindungselemente 5b vorzugsweise durch ein Loch im oberen Stangenträgerteil 6 und durch die Nut 12 im unteren Stangenträgerteil 7. Es ist denkbar, dass das zweite Verbindungselement 5b durch das Loch im oberen Stangenträgerteil 6 formfest mit diesem Verbunden ist. Das zweite Verbindungselement 5b wird dadurch beim Schwenken der unteren Stangenträgerteile 7 mit der Unterfahrschutzstange 8 um die Schwenkachse A entlang der Nut 12 geführt.

Aus der Perspektive auf den Unterfahrschutz 4, welche in Figur 1 dargestellt ist, resultiert eine Schwenkung der unteren Stangenträgerteile 7 mit der Unterfahrschutzstange 8 um die Schwenkachse A darin, dass sich die Unterfahrschutzstange 8 in der Höhenrichtung Z weiter von der Fahrbahnebene N entfernt.

In Figur 1 ist der Unterfahrschutz 4 in der unteren Endstellung dargestellt. Es ist zu sehen, dass die Sicherungselemente 9 in Figur 1 Stützbeinsicherungen sind. Es ist jeweils ein Sicherungselement 9 an dem linken Stangenträger 4a und an dem rechten Stangenträger 4b angebracht. Es ist denkbar, dass an nur einem Stangenträger 4a oder 4b ein Sicherungselement angebracht ist.

Eine einseitige Ausführung würde ein Sicherungselement 9 einsparen und damit Gewicht und Produktionskosten verringern. Bei einer einseitigen Ausführung ist nur das Öffnen eines Sicherungselementes 9 nötig um die unteren Stangenträgerteile 7 und die Unterfahrschutzstange 8 zu schwenken. Ebenfalls sind in einer entsprechenden Ausführungsform die unteren Stangenträgerteile 7 und die Unterfahrschutzstange 8 in der oberen Endstellung über nur ein Sicherungselement 9 arretierbar.

Die Sicherungselemente 9 in Figur 1 befinden sich in einem geschlossenen Zustand, wobei sie in diesem Zustand in Figur 1 die unteren Stangenträgerteile 7 und die Unterfahrschutzstange 8 in der unteren Endstellung arretieren. Es ist zu sehen, dass die Sicherungselemente 9 an den unteren Stangenträgerteilen 7 angeordnet sind und in der Breitenrichtung Y durch diese hindurchführen. Ebenfalls ist ersichtlich, dass die Sicherungselemente 9 unterhalb der oberen Stangenträgerteile 6 angeordnet sind und damit nicht durch diese hindurchführen.

Die Arretierung der unteren Stangenträgerteile 7 und der Unterfahrschutzstange 8 in der unteren Endstellung erfolgt dadurch, dass die Sicherungselemente 9 so an den unteren Stangenträgern 7 angeordnet sind, dass diese bei einer Schwenkbewegung der unteren Stangenträgerteile 7 um die Schwenkachse A ebenfalls schwenken und damit aus der Perspektive von Figur 1 in der Höhenrichtung Z in die oberen Stangenträgerteile 6 eingeführt werden müssten.

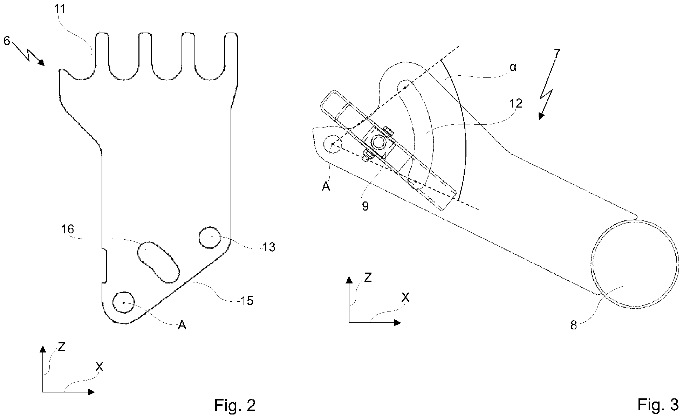

Figur 2 und Figur 3 zeigen ein oberes Stangenträgerteil 6 und ein unteres Stangenträgerteil 7 in der Seitenansicht. Die Seitenansicht entspricht dabei einer Perspektive entlang der Breitenrichtung Y auf die Stangenträgerteile 6 und 7. Die Blickrichtung ist demnach vorzugsweise senkrecht auf die Erstreckungsebene der flach ausgeführten oberen und unteren Stangenträgerteile 6 und 7 gerichtet. Dabei ist mit einer flachen Ausführung gemeint, dass die oberen und unteren Stangenträgerteile 6 und 7 in der Breitenrichtung Y wesentlich kleiner ausgebildet sind, als in der Längsrichtung X und Höhenrichtung Z.

Figur 2 zeigt das obere Stangenträgerteil 6 als einzelnes Bauteil. Am oberen Ende in der Höhenrichtung Z sind die gabelförmig ausgebildeten Konturen 11 zu erkennen mit welchen das obere Stangenträgerteil 6 an einem Chassis 3 anbringbar ist. Vorzugsweise sind die Zacken der Konturen 11 so ausgeformt, dass sie in der Längsrichtung X jeweils neben mindestens einem oberen Befestigungselement 10 am Lochbild des Chassis 3 anbringbar sind. Vorzugsweise ist einer der Zacken jeweils neben zwei oberen Befestigungselementen 10 angebracht.

Vorzugsweise sind die Konturen 11 auch als Lochbild ausgeführt (hier nicht dargestellt), welches in der Positionierung der Löcher mit einem Lochbild eines Chassis 3 übereinstimmt, an welchem die oberen Stangenträgerteile 6 befestigbar sind.

Vorzugsweise ist in Höhenrichtung Z die untere Kante 15 des oberen Stangenträgerteils 6 zumindest teilweise abgeschrägt. Dies bedeutet, dass die Kante 15 nicht parallel zur Längsrichtung X verläuft, sondern zumindest teilweise in einem Winkel zu dieser angeordnet ist. Es ist jedoch auch denkbar, dass die Kante 15 zumindest teilweise abgerundet ist, oder parallel zur Längsrichtung X verläuft. Es ist denkbar, dass die Kante 15 für die Verwendung des Unterfahrschutzes 4 an verschiedenen Nutzfahrzeugen 1 unterschiedlich ausgebildet ist.

Ebenfalls ist es denkbar, dass der obere Stangenträgerteil 6 für die Verwendung an verschiedenen Nutzfahrzeugen 1 in unterschiedlichen Größen aufgeführt sein kann. Vorzugsweise variiert die Größe des oberen Stangenträgerteils 6 insbesondere in der Höhenrichtung Z und Längsrichtung X bei Verwendung an unterschiedlichen Nutzfahrzeugen 1.

In Figur 2 ist weiterhin zu sehen, dass die Aussparungen für das Anbringen des unteren Stangenträgerteils 7 vorzugsweise entlang der Kante 15 angeordnet sind. In der Höhenrichtung Z befindet sich am unteren Ende des oberen Stangenträgerteils 6 vorzugsweise die Aussparung durch welche im montierten Zustand des Unterfahrschutzes 4 das erste Verbindungselement 5a (hier nicht abgebildet) hindurch geführt ist. Da das erste Verbindungselement 5a im montierten Zustand vorzugsweise den Lagerpunkt der Schwenkung darstellt, verläuft die Schwenkachse A mittig durch dieses Loch.

Eine weitere Aussparung 16 in dem oberen Stangenträgerteil 6 ist die Aussparung für das Sicherungselement 16. Diese Aussparung 16 ist vorzugsweise so angeordnet, dass das Sicherungselement 9 (hier nicht dargestellt) in der oberen Endstellung der unteren Stangenträgerteile 7 und der Unterfahrschutzstange 8 durch diese Aussparung 16 hindurchgeführt ist.

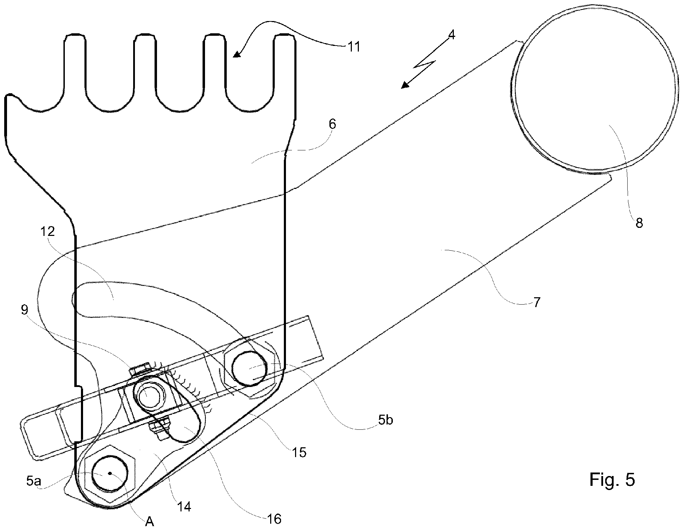

Vorzugsweise ist die Aussparung 16 als Nut ausgeführt, womit die unteren Stangenträgerteile 7 und die Unterfahrschutzstange 8 selbst in der oberen Endstellung nicht vollständig in der Schwenkung um die Schwenkachse A eingeschränkt sind. Vorzugsweise erfolgt eine entsprechend vollständige Arretierung in dem rotatorischen Freiheitsgrad um die Schwenkachse A durch Anbringung eines Halteblechs 14, welches in Figur 5 genauer dargestellt ist.

Weiterhin weist das obere Stangenträgerteil 6 vorzugsweise eine dritte Aussparung auf, welche in der Höhenrichtung Z als die anderen beiden Aussparungen angeordnet ist. Vorzugsweise ist im montierten Zustand des Unterfahrschutzes 4 ein zweites Verbindungselement 5b (hier nicht dargestellt) durch diese Aussparung geführt.

Figur 3 zeigt ein unteres Stangenträgerteil 7 mit der Unterfahrschutzstange 8. Die Unterfahrschutzstange 8 ist in der Höhenrichtung Y dabei vorzugsweise am unteren Ende des unteren Stangenträgerteils 7 angeordnet. Vorzugsweise ist die Unterfahrschutzstange 8 mit den unteren Stangenträgerteilen 7 verschweißt. Es ist jedoch auch denkbar, dass die Unterfahrschutzstange 8 an die unteren Stangenträgerteilen 7 geschraubt und/oder genietet ist.

Das untere Stangenträgerteil 7 weist weiterhin die Nut 12 auf, durch welche im montierten Zustand das zweite Verbindungselement 5b geführt ist. Vorzugsweise besitzt diese Nut 12 eine Krümmung und dadurch einen konstanten Radius um die Schwenkachse A. Vorzugsweise ist die Nut 12 in einem Winkelbereich α begrenzt. Der Winkelbereich α ist vorzugsweise durch den maximalen Schwenkbereich des zweiten Verbindungselementes 5b in der Nut zwischen oberer und unterer Endstellung gegeben.

In Figur 3 ist weiterhin die Aussparung gezeigt durch welche im montierten Zustand des Unterfahrschutzes 4 das erste Verbindungselement 5a hindurchgeführt ist und durch welche deshalb die Schwenkachse A verläuft.

Weiterhin zeigt Figur 3 das Sicherungselement 9 mit einem entsprechenden Hebelmechanismus für das Sicherungselement 9. Das Sicherungselement 9 ist in Figur 3 demnach als Federriegel dargestellt. Vorzugsweise ist das Sicherungselement 9 zwischen der Schwenkachse und der Nut 12 angeordnet. Eine andere Anordnung des Sicherungselementes 9, am oberen Stangenträgerteil 6 ist auch denkbar.

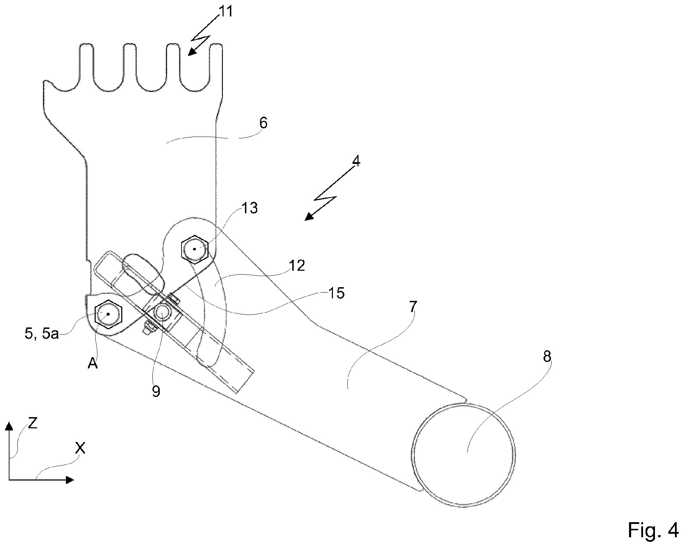

Die Figuren 4 und 5 zeigen jeweils ein oberes Stangenträgerteil 6 mit einem unteren Stangenträgerteil 7 zusammen montiert in der Seitenansicht. Die Figuren 4 und 5 stellen den Unterfahrschutz 4 demnach in der Form dar, wie er an einem Nutzfahrzeug 1 montiert ist.

Figur 4 zeigt den Unterfahrschutz 4 mit den unteren Stangenträgerteilen 7 und der Unterfahrschutzstange 8 in der unteren Endstellung. Vorzugsweise sind die unteren und oberen Stangenträgerteile 5 und 6 über die ersten und zweiten Verbindungselemente 5a und 5b miteinander verbunden. Vorzugsweise stellt das erste Verbindungselement 5a die Schwenkachse A dar, wohingegen das zweite Verbindungselement 5b vorzugsweise der Bolzen 13 darstellt, welche durch die Nut 12 im unteren Stangenträgerteil 7 geführt ist.

In der dargestellten Perspektive in Figur 4 ist erkennbar, dass das Sicherungselement 9 in der Höhenrichtung Z in der unteren Endstellung vorzugsweise unterhalb der unteren Kante des oberen Stangenträgerteils 15 angeordnet ist. Zusammen mit der Darstellung in Figur 1 ist ersichtlich, dass bei Schwenkung der unteren Stangenträgerteile 7 und der Unterfahrschutzstange 8 um die Schwenkachse A in die obere Endstellung, das Sicherungselement 9 gegen die Kante 15 stoßen würde und demnach die Schwenkung verhindert.

Eine weitere Schwenkung der unteren Stangenträgerteile 7 und der Unterfahrschutzstange 8 entgegen der Höhenrichtung Z ist ebenfalls nicht möglich, da der Bolzen 13 eine Endstellung in der Nut 12 erreicht hat und die Begrenzung der Nut 12 im Winkelbereich α dafür sorgt, dass nicht weiter um die Schwenkachse A geschwenkt werden kann. Eine Kraftaufnahme beim Aufprall geschieht demnach durch das erste und zweite Verbindungselement 5a und 5b.

Es ist ersichtlich, dass durch lösen des Sicherungselementes 9 ein Freiheitsgrad der Rotation um die Schwenkachse A gelöst wird und damit ein Schwenken der unteren Stangenträgerteile 7 und der Unterfahrschutzstange 8 in die obere Endstellung, welche in Figur 5 dargestellt ist, möglich ist.

Figur 5 zeigt den Unterfahrschutz 4 in der oberen Endstellung. In der oberen und unteren Endstellung befindet sich das erste Verbindungselement 5a vorzugsweise in der gleichen Anordnung in Bezug auf die Stangenträgerteile 6 und 7. Im Vergleich dazu befindet sich das zweite Verbindungselement 5b in der unteren Endstellung vorzugsweise an einem Längsende der Nut 12, wohingegen es sich in der oberen Endstellung am anderen Längsende der Nut 12 befindet. Es ist denkbar, dass sich das zweite Verbindungselement 5b demnach bei Schwenken des unteren Stangenträgerteils 7 um die Schwenkachse A entlang der Nut 12 bewegt, weshalb das untere Verbindungselement 5b demnach als Bolzen 13 fungiert.

Im Vergleich zu den Figuren 1 bis 4 weist Figur 5 ein zusätzliches Halteblech 14 mit zwei Löchern auf, wobei das Halteblech vorzugsweise so an dem oberen Stangenträgerteil 6 angebracht ist, dass das erste Verbindungselement 5a durch eines der Löcher führt, und das Sicherungselement 9 durch das andere Loch führt.

Es ist denkbar, dass die Aussparung für das Sicherungselement 16 im oberen Stangenträgerteil 6 als Nut ausgebildet ist, wodurch keine vollständige Einschränkung der Schwenkung um die Schwenkachse A gewährleistet ist. Vorzugsweise ist das Halteblech 14 so an dem oberen Stangenträgerteil 6 angebracht, dass sein zweites Loch über der Aussparung für das Sicherungselement 16 liegt und damit eine Schwenkmöglichkeit des unteren Stangenträgerteils und der Unterfahrschutzstange 8 und die Schwenkachse A vollständig verhindert.

Figur 5 zeigt, wie der Abstand der Unterfahrschutzstange zum Boden in der oberen Endstellung effektiv vergrößert ist.

### Bezugszeichenliste

- 1: Nutzfahrzeug
- 2: hinteres Ende des Nutzfahrzeugs
- 3: Chassis des Nutzfahrzeugs
- 4: Unterfahrschutz
- 4a, b: Stangenträger
- 5: Verbindungelement
- 5a: erstes Verbindungselement
- 5b: zweites Verbindungselement
- 6: obere Stangenträgerteile
- 7: untere Stangenträgerteile
- 8: Unterfahrschutzstange
- 9: Sicherungselement
- 10: oberes Befestigungselement
- 11: Konturen zur Befestigung an Lochbild
- 12: Nut um Schwenkachse
- 13: Bolzen
- 14: Halteblech
- 15: untere Kante des oberen Stangenträgerteils
- 16: Aussparung für das Sicherungselement im oberen Stangenträgerteil

- A: Schwenkachse
- N: Fahrbahnebene
- X: Längsrichtung des Nutzfahrzeugs
- Y: Breitenrichtung
- Z: Höhenrichtung

## Patentansprüche

1. Unterfahrschutz (4) für Nutzfahrzeuge (1) mit einem Chassis (3), mit mindestens zwei, in einer Breitenrichtung (Y) des Chassis (3) nebeneinander liegenden Stangenträgern (4a, b), welche in einer Längsrichtung (X) an einem hinteren Ende (2) des Chassis (3) anbringbar sind und zum Befestigen einer sich parallel zu einer Fahrbahnebene (N) erstreckenden Unterfahrschutzstange (8) dienen, wobei die beiden Stangenträger (4a, b) jeweils mindestens einen oberen Stangenträgerteil (6) und einen unteren Stangenträgerteil (7) aufweisen und der untere Stangenträgerteil (7) mit der Unterfahrschutzstange (8) bezüglich einer Schwenkachse (A) zum oberen Stangenträgerteil (6) schwenkbar ist, die oberen oder die unteren Stangenträgerteile (6, 7) jeweils eine bogenabschnittsförmige, um die Schwenkachse (A) verlaufende Nut (12) und die anderen Stangenträgerteile (6, 7) jeweils einen in der Nut (12) geführten Bolzen (13) aufweisen, wodurch eine maximal mögliche Schwenkbewegung der unteren Stangenträgerteile (7) mit der Unterfahrschutzstange (8) um die Schwenkachse (A) herum in einem begrenzten Winkelbereich α liegt, wobei jeweils ein erstes Verbindungselement (5a) einen unteren Stangenträgerteil (7) mit einem oberen Stangenträgerteil (6) verbindet, wobei die Schwenkachse (A) mittig durch die ersten Verbindungselemente (5a) verläuft, wobei an einem der Stangenträgerteile (6, 7) zumindest ein Sicherungselement (9) angebracht ist, welches zumindest teilweise entlang der Breitenrichtung (Y) durch zumindest eines der Stangenträgerteile (6, 7) hindurchgeführt ist und dadurch die unteren Stangenträgerteile (7) mit der Unterfahrschutzstange (8) in der oberen und/oder unteren Endstellung arretiert,
**dadurch gekennzeichnet, dass**
ein Loch (16) für das Sicherungselement (9) im oberen Stangenträgerteil (6) eine Nut ist, und ein Halteblech (14), welches zumindest zwei Löcher aufweist, am oberen Stangenträgerteil (6) so angebracht ist, dass durch eines der Löcher die Schwenkachse (A) und damit das erste Verbindungselement (5a) führt, wobei das andere Loch über der Nut angeordnet ist, sodass das Sicherungselement (9) durch das Halteblech (14) und das obere und untere Stangeträgerteil (6, 7) führbar ist.

2. Unterfahrschutz (4) nach Anspruch 1,
**dadurch gekennzeichnet, dass**
die Schwenkachse (A) parallel zur Fahrbahnebene (N) in einer Breitenrichtung (Y) des Fahrzeugs verläuft und damit die Schwenkung der unteren Stangenträgerteile (7) und der Unterfahrschutzstange (8) zwischen der Höhenrichtung (Z) und der Längsrichtung (X) verläuft.

3. Unterfahrschutz (4) nach zumindest einem der vorherigen Ansprüche,
**dadurch gekennzeichnet, dass**
die unteren Stangenträgerteile (7) mit der Unterfahrschutzstange (8) beim Schwenken um die Schwenkachse (A) durch den Bolzen (13) in der Nut (12) in einer oberen und einer unteren Endstellung begrenzt sind, wobei die Unterfahrschutzstange (8) in der oberen Endstellung weiter von der Fahrbahnebene (N) entfernt ist, als in der unteren Endstellung.

4. Unterfahrschutz (4) nach Anspruch 3,
**dadurch gekennzeichnet, dass**
die Stangenträgerteile (7) mit der Unterfahrschutzstange (8) zwischen der unteren und der oberen Endstellung um den Winkelbereich α schwenkbar sind.

5. Unterfahrschutz (4) nach zumindest einem der vorherigen Ansprüche,
**dadurch gekennzeichnet, dass**
der Winkelbereich α 0° bis 40°, bevorzugt 0° bis 60° und am meisten bevorzugt 0° bis 80° umfasst.

6. Unterfahrschutz (4) nach zumindest einem der vorherigen Ansprüche,
**dadurch gekennzeichnet, dass**
der Unterfahrschutz (4) zumindest in der unteren Endstellung des unteren Stangenträgerteils (7) und der Unterfahrschutzstange (8) einer plastischen Deformation, durch eine Kraft von mindestens 180 kN in Längsrichtung (X) zum Chassis (3), standhalten kann.

7. Unterfahrschutz (4) nach wenigstens einem der vorangegangenen Ansprüche,
**dadurch gekennzeichnet, dass**
das Sicherungselement (9) als Stützbeinsicherung, Splint, Federriegel, Bolzen, oder ähnliches ausgeführt ist.

8. Unterfahrschutz (4) nach wenigstens einem der vorangegangenen Ansprüche,
**dadurch gekennzeichnet, dass**
die Unterfahrschutzstange (8) ein Material mit einer Brinellhärte zwischen 450 HBW und 550 HBW aufweist, wobei das Material vorzugsweise zumindest teilweise Chrom und/oder Mangan aufweist.

9. Unterfahrschutz (4) nach wenigstens einem der vorangegangenen Ansprüche,
**dadurch gekennzeichnet, dass**
die oberen Stangenträgerelemente (6) Konturen (11) aufweisen, über welche diese mit oberen Befestigungselementen (10) an einem Lochbild des Chassis (3) befestigbar sind.

## Claims

1. Underride guard (4) for commercial vehicles (1) with a chassis (3), with at least two rod carriers (4a, b) lying next to one another in a width direction (Y) of the chassis (3), which can be attached in a longitudinal direction (X) to a rear end (2) of the chassis (3) and are used for fastening an underride protection bar (8) extending parallel to a roadway plane (N), wherein the two bar supports (4a, b) each have at least one upper bar support part (6) and one lower bar support part (7) and the lower bar support part (7) is pivotable with the underride protection bar (8) with respect to a pivot axis (A) to the upper bar support part (6), the upper or the lower bar support parts (6, 7) each have a groove (12) in the form of an arcuate section extending around the pivot axis (A) and the other bar support parts (6, 7) each have a bolt (13) guided in the groove (12), as a result of which a maximum possible pivoting movement of the lower bar support parts (7) with the underride protection bar (8) around the pivot axis (A) lies within a limited angular range α wherein in each case a first connecting element (5a) connects a lower bar support part (7) to an upper bar support part (6), wherein the pivot axis (A) runs centrally through the first connecting elements (5a), wherein at least one securing element (9) is attached to one of the bar support parts (6, 7), which at least partially extends along the width direction (Y) of the lower bar support part (7) with the underride protection bar (8) around the pivot axis (A) in a limited angular range α, a first connecting element (5a) in each case connecting a lower bar support part (7) to an upper bar support part (6), the pivot axis (A) running centrally through the first connecting elements (5a), wherein at least one securing element (9) is attached to one of the bar support parts (6, 7), which element is guided at least partially along the width direction (Y) through at least one of the bar support parts (6, 7) and thereby locks the lower bar support parts (7) with the underride protection bar (8) in the upper and/or lower end position,
**characterized in that**
a hole (16) for the securing element (9) in the upper bar support part (6) is a groove, and a retaining plate (14), which has at least two holes, is attached to the upper bar support part (6) in such a way that the pivot axis (A) and thus the first connecting element (5a) leads through one of the holes, the other hole being arranged above the groove, so that the securing element (9) can be guided through the retaining plate (14) and the upper and lower rod carrier part (6, 7).

2. Underride guard (4) according to claim 1,
**characterized in that**
the pivot axis (A) runs parallel to the road surface plane (N) in a width direction (Y) of the vehicle and thus the pivoting of the lower bar support parts (7) and the underride protection bar (8) runs between the height direction (Z) and the longitudinal direction (X).

3. Underride guard (4) according to at least one of the preceding claims,
**characterized in that**
the lower bar support parts (7) with the underride protection bar (8) are limited in an upper and a lower end position by the bolt (13) in the groove (12) when pivoting about the pivot axis (A), the underride protection bar (8) being further away from the roadway plane (N) in the upper end position than in the lower end position.

4. Underride guard (4) according to claim 3,
**characterized in that**
the bar support part (7) can be pivoted with the underride protection bar (8) between the lower and the upper end position by the angular range α.

5. Underride guard (4) according to at least one of the preceding claims,
**characterized in that**
the angle range α comprises 0° to 40°, preferably 0° to 60° and most preferably 0° to 80°.

6. Underride guard (4) according to at least one of the preceding claims,
**characterized in that**
the underride guard (4) can withstand a plastic deformation, at least in the lower end position of the lower bar support part (7) and the underride protection bar (8), by a force of at least 180 kN in the longitudinal direction (X) to the chassis (3).

7. Underride guard (4) according to at least one of the preceding claims,
**characterized in that**
the securing element (9) is designed as a support leg securing device, cotter pin, spring bolt, pin or similar.

8. Underride guard (4) according to at least one of the preceding claims,
**characterized in that**
the underride protection bar (8) comprises a material having a Brinell hardness of between 450 HBW and 550 HBW, the material preferably comprising at least partially chromium and/or manganese.

9. Underride guard (4) according to at least one of the preceding claims,
**characterized in that**
the upper bar support parts (6) have contours (11) via which they can be fastened to a hole pattern of the chassis (3) by means of upper fastening elements (10).

## Revendications

1. Protection anti-encastrement (4) pour véhicules utilitaires (1) avec un châssis (3), avec au moins deux supports de barres (4a, b) situés l'un à côté de l'autre dans une direction de largeur (Y) du châssis (3), qui peuvent être montés dans une direction longitudinale (X) à une extrémité arrière (2) du châssis (3) et qui servent à fixer une barre de protection anti-encastrement (8) s'étendant parallèlement à un plan de chaussée (N), les deux supports de barre (4a, b) présentant chacun au moins une partie supérieure de support de barre (6) et une partie inférieure de support de barre (7) et la partie inférieure de support de barre (7) pouvant pivoter avec la barre de protection anti-encastrement (8) par rapport à un axe de pivotement (A) vers la partie supérieure de support de barre (6), les parties de support de barre supérieures ou inférieures (6, 7) présentent chacune une rainure (12) en forme de section d'arc s'étendant autour de l'axe de pivotement (A) et les autres parties de support de barre (6, 7) présentent chacune un boulon (13) guidé dans la rainure (12), ce qui fait qu'un mouvement de pivotement maximal possible des parties de support de barre inférieures (7) avec la barre de protection anti-encastrement (8) autour de l'axe de pivotement (A) se situe dans une plage angulaire limitée α, un premier élément de liaison (5a) reliant respectivement une partie inférieure de support de barre (7) à une partie supérieure de support de barre (6), l'axe de pivotement (A) s'étendant au centre à travers les premiers éléments de liaison (5a), au moins un élément de sécurité (9) étant monté sur l'une des parties de support de barre (6, 7), lequel s'étend au moins partiellement le long de la direction de la largeur (Y) est guidé à travers au moins une des parties de support de barre (6, 7) et bloque ainsi les parties de support de barre inférieures (7) avec la barre de protection anti-encastrement (8) dans la position finale supérieure et/ou inférieure,
**caractérisé en ce que**

2. protection anti-encastrement (4) selon la revendication 1,
**caractérisé en ce que**
l'axe de pivotement (A) est parallèle au plan de la chaussée (N) dans une direction de largeur (Y) du véhicule et, par conséquent, le pivotement des éléments inférieurs de support de barre (7) et de la barre anti-encastrement (8) s'étend entre la direction de hauteur (Z) et la direction longitudinale (X).

3. protection anti-encastrement (4) selon au moins l'une des revendications précédentes, **caractérisé en ce que**
les parties inférieures de support de barre (7) avec la barre de protection anti-encastrement (8) sont limitées dans une position finale supérieure et une position finale inférieure lors du pivotement autour de l'axe de pivotement (A) par le boulon (13) dans la rainure (12), la barre de protection anti-encastrement (8) étant plus éloignée du plan de la chaussée (N) dans la position finale supérieure que dans la position finale inférieure.

4. protection anti-encastrement (4) selon la revendication 3,
**caractérisé en ce que**
les éléments de support de barre (7) peuvent pivoter avec la barre de protection anti-encastrement (8) entre la position finale inférieure et la position finale supérieure autour de la plage angulaire α.

5. protection anti-encastrement (4) selon au moins l'une des revendications précédentes, **caractérisé en ce que**
la plage angulaire α comprend de 0° à 40°, de préférence de 0° à 60°, et plus préférablement de 0° à 80°.

6. protection anti-encastrement (4) selon au moins l'une des revendications précédentes, **caractérisé en ce que**
la protection anti-encastrement (4) peut résister à une déformation plastique, au moins dans la position finale inférieure de la partie inférieure de support de barre (7) et de la barre de protection anti-encastrement (8), par une force d'au moins 180 kN dans la direction longitudinale (X) vers le châssis (3).

7. protection anti-encastrement (4) selon au moins l'une des revendications précédentes, **caractérisé en ce que**
l'élément de sécurité (9) est réalisé sous la forme d'une sécurité de jambe de force, d'une goupille, d'un verrou à ressort, d'un boulon ou d'un élément similaire.

8. protection anti-encastrement (4) selon au moins l'une des revendications précédentes, **caractérisé en ce que**
la barre anti-encastrement (8) comprend un matériau ayant une dureté Brinell comprise entre 450 HBW et 550 HBW, ledit matériau comprenant de préférence au moins partiellement du chrome et/ou du manganèse.

9. protection anti-encastrement (4) selon au moins l'une des revendications précédentes, **caractérisé en ce que**
les éléments de support de barre supérieurs (6) présentent des contours (11) par l'intermédiaire desquels ceux-ci peuvent être fixés avec des éléments de fixation supérieurs (10) à une configuration de trous du châssis (3).
